# EUROPÄISCHE PATENTSCHRIFT

(11) **EP 0 597 975 B1**
(45) Veröffentlichungstag und Bekanntmachung des Hinweises auf die Patenterteilung: **17.05.1995**
(21) Anmeldenummer: 92916966.2
(22) Anmeldetag: 06.08.1992
(51) Int. Cl.: B65D 65/46, B65D 81/09, E04B 1/62

(54) **VERFAHREN ZUM HERSTELLEN NEUER VERPACKUNGSSTOFFE ODER ISOLIERBAUSTOFFE ALS ERSATZ VON POLYSTYROL-CHIPS BZW. POLYSTYROL-KÜGELCHEN ODER POLYURETHANSCHAUMPRODUKTE SOWIE EXPANDIERTES MATERIAL**
METHOD FOR THE PRODUCTION OF NEW PACKAGING MATERIALS OR INSULATING MATERIALS FOR CONSTRUCTION PURPOSES AS A SUBSTITUTE FOR POLYSTYRENE CHIPS OR SPHERES AND POLYURETHANE-FOAM PRODUCTS, PLUS EXPANDED MATERIAL MADE BY THIS METHOD
PROCEDE POUR LA FABRICATION DE NOUVELLES MATIERES D'EMBALLAGE OU DE MATERIAUX DE CONSTRUCTION ISOLANTS EN REMPLACEMENT DES COPEAUX ET BILLES DE POLYSTYRENE, OU BIEN DE MOUSSES DE POLYURETHANE ET MATERIAUX EXPANSES

(30) Priorität: 13.08.1991 DE 4126756
(43) Veröffentlichungstag der Anmeldung: 25.05.1994
(73) Patentinhaber: SCHAAF TECHNOLOGIE GMBH, D-65520 Bad Camberg (DE)
(72) Erfinder: SCHAAF, Heinz-Josef, D-6277 Bad Camberg (DE)
(74) Vertreter: Lewald, Dietrich, Dipl.-Ing.
(86) Internationale Anmeldenummer: EP9201784
(87) Internationale Veröffentlichungsnummer: WO9303976

(56) Entgegenhaltungen:
- EP-A- 0 201 625
- EP-A- 0 269 990
- EP-A- 0 471 306
- EP-A- 0 474 095
- WO-A-90/14935
- DE-A- 3 545 001
- DE-C- 4 025 256

## Beschreibung

Die Erfindung betrifft ein Verfahren zum Herstellen neuer Verpackungsstoffe oder Isolierbaustoffe, als Ersatz und nach Art von Polystyrol-Chips bzw. Polystyrol-Kügelchen oder Polyurethanschaumprodukten.

Gegenstand der Erfindung ist auch die Anwendung und das Produkt sowie dessen Verwendung.

Die Erfindung richtet sich auch auf ein expandiertes Material für Verpackungen und/oder zur Einbindung in Porenziegel.

Aus den verschiedensten Gründen wird an Ersatzstoffen für Polystyrol-Chips (Styropor-Chips) gearbeitet, insbesondere an Verpackungs- oder sonstigen Stoffen, die biologisch abbaubar und ansonsten unbedenklich sind.

Versuche mit aus Stärke hergestellten Extrudaten verliefen nicht erfolgreich, da diese keine Feuchtigkeit vertragen bzw. sich in Wasser auflösen.

Es besteht beachtliches Interesse, umweltbelastende Hartschaumprodukte aus Kunststoff durch biologisch abbaubare zu ersetzen.

Stärke- und proteinhaltige Rohstoffe können durch Kochextrusion zu Produkten mit großen Volumina und hervorragender Umweltverträglichkeit extrudiert werden. Das Problem besteht jedoch darin, daß bei an sich wünschenswerter niedriger Produktfeuchte (kleiner 5%) die Schaumprodukte leicht zerbröseln, bei höherer Produktfeuchte die mechanischen Eigenschaften zwar besser werden durch höhere Elastizität, die Haltbarkeit jedoch nicht praktischen Anforderungen genügt. Bei direktem Kontakt mit Wasser lösen sich solche Produkte auf.

Aus der WO 90/14935 sind Formkörper, das sind Platten, Spanplatten, Holzspanplatten oder dergl. bekannt. Holzfasern, Holzschnitzel werden mit einem Bindemittel aus einer der Extrusion ausgesetzten Masse gefertigt. Ziel ist es, die mechanische Festigkeit zu erhöhen. Das Bindemittel erzeugt ein Schmelze-Gel. Es sollen möglichst viele Schnitzel verarbeitet werden, die Expansion nimmt entsprechend ab, die hergestellten Platten sind relativ dicht.

Erfindungsgemäß wird dagegen ein Verfahren der oben genannten Art weitergebildet.

Der Erfindung liegt die Aufgabe zugrunde, Ersatzstoffe der oben angegebenen Art zu schaffen, deren mechanische Eigenschaften zu verbessern und dabei alles zu verhindern, was dazu führen könnte, daß der Konsument solche Stoffe mit Lebensmitteln verwechselt.

Erreicht wird dies überraschend durch ein Verfahren zum Herstellen neuer Verpackungsstoffe oder Isolierbaustoffe, als Ersatz und nach Art von Polystyrol-Chips bzw. Polystyrol-Kügelchen oder Polyurethanschaumprodukten, das sich dadurch auszeichnet, daß als Rohextrudat stärke- und/oder proteinhaltige Rohstoffe wie Mais, Reis, Weizen, Soja, Tapioka etc. bzw. mit Keratinrohstoffen und organische Abfallstoffe sowie Additive zur Verbesserung der elastischen Eigenschaften und/oder der Sorptionsisotherme unter Expandieren extrudiert werden und daß auf das Extrudat ein Überzug aus organischen Abfallstoffen faseriger Struktur wie Strohschnitzel, Holzprodukte, Keratinmaterial, zermahlene Papierabfälle etc plus biologisch abbaubaren Bindemitteln aufgebracht wird, wobei das Überzugsmaterial zusammen mit einem verdampfenden Lösungsmittel aufgebracht und durch die hierdurch hervorgerufene Gasbildung eine weitere Volumenvergrösserung herbeigeführt wird.

Der Überzug wird in vorteilhafter Weise aufgesprüht.

Das Bindemittel wird zweckmässigerweise aufgesprüht und hierauf werden Faserstoffe zum Haften gebracht.

Vorzugsweise wird das Überzugsmaterial zusammen mit einem verdampfenden Lösungsmittel aufgebracht und durch die hierdurch hervorgerufene Gasbildung wird eine weitere Volumenvergrösserung herbeigeführt.

Vorteilhaft wird das Rohextrudat aus stärke- und/oder proteinhaltigen Rohstoffen wie Mais, Reis, Weizen, Soja, Tapioka etc. bzw. Keratin-Rohstoffen hergestellt, dem als organische Abfallstoffe Holz, Stroh, Faserstoffe ... zugemischt werden, wobei der Anteil der organischen Abfallstoffe so hoch wie verfahrenstechnisch möglich gewählt wird und dem Extrusionsrohstoff geeignete Additive, die die elastischen Eigenschaften und die Sorptionsisotherme verbessern, zugegeben werden.

Vorteilhaft zeichnet sich das Verfahren dadurch aus, daß die organischen Abfallstoffe faseriger Struktur des Überzugs Strohschnitzel, Holzprodukte, Keratin-Material, zermahlene Papierabfälle ... sind.
Ausser dem werden die Faserstoffe und das Bindemittel des Überzugs vermischt und dann auf das Extrudat aufgetragen.

Besonders bevorzugt werden solchen Bindemitteln oder Klebstoffen, welche bekannterweise entsprechend reagieren, Kalziumionen enthaltende Stoffe zum Verfestigen und Abbinden zum gewünschten Zeitpunkt, in einstellbarer Weise zugemischt. Als Beispiel seien Zelluloseester genannt.

Eine besondere Anwendung findet das Verfahren zur Herstellung von Verpackungsstoffen.
Das Material findet auch Verwendung auf der Grundlage von Biopolymeren als Ersatzstoff für Polystyrol oder Polyurethan in Porenziegeln.

Nach einer anderen Lösung gemäß der Erfindung ist es möglich, daß stärkehaltige Rohstoffe mit Bindemittel und Zusatzstoffen in Form von Naturgummi, beispielsweise Gummiarabikum, Alginate, Proteine, für die eine unlösliche Form angestrebt wird, hochmolekulare Zellulosestoffe und deren modifizierte Derivate, vermischt und extrudiert werden.

Durch derartige Beigaben zum eigentlichen Rohstoff erzielt man eine elastische Struktur, eine bessere Gleichgewichtsfeuchte (Sorptionsisotherme) und eine bessere Haltbarkeit der Produkte, ohne deren biologische Abbaubarkeit bzw. Kompostierung zu beeinträchtigen.

Von hervorragender Bedeutung ist erfindungsgemäß, daß auf das Rohextrudat der erwähnte Überzug aus solchen Abfallstoffen aufgebracht wird.

Es wird ein Rohextrudat hergestellt aus stärke- und/oder proteinhaltigen Rohstoffen wie Mais, Reis, Weizen, Soja, Tapioka, Kartoffeln etc. bzw. Keratin-Rohstoffen, welchen andere organische Abfallstoffe beigemischt werden. Bei diesen kann es sich um Holz, Stroh, Faserstoffe oder dergleichen handeln.

Da letztere besonders preiswert sind, wird deren Anteil im Hinblick auf das gewünschte Produkt und im Hinblick auf die Verfahrenstechnik in größtmöglichem Anteil gewählt, immer aber im Hinblick auf das Hauptziel, das in einem expandierten Produkt mit möglichst grossem Volumen zu sehen ist.

Den Extrusionsrohstoffen können weiterhin geeignete Additive, die die elastischen Eigenschaften und die Sorptionsisotherme der Extrudate verbessern, beigegeben werden.

Der auf das Extrudat aufzubringende Überzug kann aus weiteren organischen Abfallstoffen und hier insbesondere faseriger Struktur wie Strohschnitzel, Holzprodukte oder auch tierischem Material wie Keratin-Material, zermahlenen Papierabfällen etc. zusammen mit einem geeigneten Bindemittel, bestehen.

Allgemein an sich bekannte Klebstoffe kommen als Bindemittel in Frage. Gewählt werden biologisch unbedenkliche bzw. abbaubare Produkte, wie z.B. Stärkekleister oder Gelatine-Klebstoff.

Der Auftrag des Überzugs kann auf die verschiedenste Weise erfolgen, einmal mischt man die Faserstoffe mit dem Bindemittel und trägt diese auf das Extrudat auf oder das Bindemittel wird getrennt auf das Extrudat aufgesprüht, die Faserstoffe anschließend in geeigneter Form auf das mit Klebstoff benetzte Extrudat aufgetragen.

Schließlich ist es auch möglich, während des Prozesses des Überziehens oder anschließend daran das Bindemittel bzw. den Überzug durch Verdampfung von Lösungsmitteln oder Wasser oder durch mittels chemischer Reaktion hervorgerufener Gasbildung das Bindemittel im Volumen weiter zu vergrössern.

Eine Optimierung bzw. eine Einstellung des Verfahrensablaufs wird dadurch gefördert, daß bestimmte Klebstoffe, wie z.B. Zelluloseester sich nur bei Vorhandensein von Kalziumionen verfestigen bzw. abbinden. Dies führt zur Möglichkeit einer Optimierung des Prozeßverlaufs, vor allen Dingen des Coating-Verfahrens.

Gegenstand der Erfindung ist auch ein expandiertes Material für Verpackungen und/oder zur Einbindung in Porenziegel, das sich dadurch auszeichnet, daß es aus stärkehaltigen und/oder proteinhaltigen Rohstoffen, organischen Abfallstoffen und weiteren Additiven zur Verbesserung der elastischen Eigenschaften und zur Verbesserung der Sorptionsisothermen mit einem, gegebenenfalls durch Verdampfen, zusätzlich geblähten Überzug aus organischen Abfallstoffen faseriger Struktur wie Strohschnitzeln, Holzprodukten, Keratin-Material, zermahlenen Papierabfällen sowie einem geeigneten Bindemittel besteht.

Gegenüber bisher bekannten Produkten zeitigen die erhaltenen Produkte unter anderem die folgenden Vorteile:
Geringes Gewicht (großes Volumen),
hohe mechanische Stabilität (Elastizität) ohne Zerbröseln gute Haltbarkeit und Feuchtestabilität
keine Verwechslung mit Lebensmitteln durch bewusst faserige Oberfläche und/oder entsprechende Einfärbung
häufige Wiederverwertbarkeit
äusserst wirtschaftliche und umweltschonende Herstellung durch weitgehende Verwendung minderwertiger Abfallrohstoffe sowie
gute biologische Abbaubarkeit und damit gute Kompostierungseigenschaften.

Ein solches Material kann wie gesagt auch ähnlich wie Styropor dem Ziegelmehl zur Herstellung von Porenziegeln beigemischt werden, auch als brennbares Produkt, das nach dem Verbrennen die gewünschten Hohlräume zurückläßt, dessen Abgase aber wesentlich weniger umweltbelastend sind als die bei der Verbrennung von Kunststoffen entstehenden Abgase.

Durch die Maßnahme nach der Erfindung lassen sich Lebensmittelabfälle einwandfrei wiederverwerten.

Benutzt man die Verfahrensvariante, bei der Lösungsmittel verdampft wird, so kann es sich beim Lösungsmittel um die üblichen Kohlenwasserstoffe, Alkohole etc. handeln, die vorzugsweise in bekannter Weise rückgewonnen und wiederverwendet werden, z.B. kann man Hexan einsetzen.

Auf der Grundlage der Biopolymere, insbesondere solchen aus Abfallstoffen, schafft die Maßnahme nach der Erfindung neue und fortschrittliche Produkte.

Erfindungsgemäß einsetzbare Klebstoffe und Bindemittel: Für das natürliche Eindicken und Gelieren können Colloide, die vom pflanzlichen Rohmaterial wie Algen, Karuben, Zitrusfrüchten und Äpfeln (Alginaten, Karragenaten, Pektinen) gewonnen wurden sowie solche wie durch Biosynthese gewonnenes Xanthan verwendet werden.

## Patentansprüche

1. Verfahren zum Herstellen neuer Verpackungsstoffe oder Isolierbaustoffe, als Ersatz und nach Art von Polystyrol-Chips bzw. Polystyrol-Kügelchen oder Polyurethanschaumprodukten, dadurch gekennzeichnet, daß als Rohextrudat stärke- und/oder proteinhaltige Rohstoffe wie Mais, Reis, Weizen, Soja, Tapioka etc. bzw. mit Keratinrohstoffen und organische Abfallstoffe sowie Additive zur Verbesserung der elastischen Eigenschaften und/oder der Sorptionsisotherme unter Expandieren extrudiert werden und daß auf das Extrudat ein Überzug aus organischen Abfallstoffen faseriger Struktur wie Strohschnitzel, Holzprodukte, Keratinmaterial, zermahlene Papierabfälle etc. plus biologisch abbaubaren Bindemitteln aufgebracht wird, wobei das Überzugsmaterial zusammen mit einem verdampfenden Lösungsmittel aufgebracht und durch die hierdurch hervorgerufene Gasbildung eine weitere Volumenvergrösserung herbeigeführt wird.

2. Verfahren nach Anspruch 1, dadurch gekennzeichnet, daß der Überzug aufgesprüht wird.

3. Verfahren nach Anspruch 1, dadurch gekennzeichnet, daß das Bindemittel aufgesprüht wird und hierauf Faserstoffe zum Haften gebracht werden.

4. Verfahren nach einem der vorhergehenden Ansprüche, dadurch gekennzeichnet, daß das Rohextrudat als organische Abfallstoffe Holz, Stroh, Faserstoffe... zugemischt werden, wobei der Anteil der organischen Abfallstoffe so hoch wie verfahrenstechnisch möglich gewählt wird und dem Extrusionsrohstoff geeignete Additive, die die elastischen Eigenschaften und die Sorptionsisotherme verbessern, zugegeben werden.

5. Verfahren nach Anspruch 1, dadurch gekennzeichnet, daß als Bindemittel an sich bekannte Klebstoffe, die biologisch abbaubar sind, verwendet werden.

6. Verfahren nach Anspruch 2, dadurch gekennzeichnet, daß die Faserstoffe und das Bindemittel des Überzugs vermischt und dann auf das Extrudat aufgetragen werden.

7. Verfahren nach Anspruch 1, dadurch gekennzeichnet, daß solchen Bindemitteln oder Klebstoffen, welche bekannterweise entsprechend reagieren, Kalziumionen enthaltende Stoffe zum Verfestigen und Abbinden zum gewünschten Zeitpunkt in einstellbarer Weise zugemischt werden.

8. Verfahren nach einem der vorhergehenden Ansprüche, dadurch gekennzeichnet, daß bewußt eine faserige Oberfläche hergestellt und eine Einfärbung vorgenommen wird.

9. Anwendung des Verfahrens nach einem der vorhergehenden Ansprüche zur Herstellung von Verpackungsstoffen.

10. Verpackungsstoffe hergestellt nach dem Verfahren eines der Ansprüche 1 bis 9.

11. Verwendung des nach einem der Ansprüche 1-8 hergestellten Materials auf der Grundlage von Biopolymeren als Ersatzstoff für Polystyrol oder Polyurethan in Porenziegeln.

12. Expandiertes Material für Verpackungen und/oder zur Einbindung in Porenziegel, dadurch gekennzeichnet, daß es aus stärkehaltigen und/oder proteinhaltigen Rohstoffen, organischen Abfallstoffen und weiteren Additiven zur Verbesserung der elastischen Eigenschaften und zur Verbesserung der Sorptionsisothermen mit einem, gegebenenfalls durch Verdampfen, zusätzlich geblähten Überzug aus organischen Abfallstoffen faseriger Struktur wie Strohschnitzeln, Holzprodukten, Keratin-Material, zermahlenen Papierabfällen sowie einem geeigneten Bindemittel besteht.

## Claims

1. Process for the production of new packaging materials or insulating construction materials, as a replacement for and in the manner of polystyrene chips or beads or polyurethane foam products, characterized in that, as crude extrudate, starch- and/or protein-containing raw materials, such as maize, rice, wheat, soya, tapioca, etc., or keratin raw materials and organic waste materials and additives for improving the elastic properties and/or the sorption isotherms, are extruded with expansion, and in that a coating of organic waste materials having a fibrous structure, such as chopped straw, wood products, keratin material, ground waste paper, etc., plus biodegradable binders is applied to the extrudate, the coating material being applied together with a volatile solvent and the consequent gas formation causing a further increase in volume.

2. Process according to Claim 1, characterized in that the coating is applied by spraying.

3. Process according to Claim 1, characterized in that the binder is applied by spraying, and fibrous materials are then stuck on.

4. Process according to one of the preceding claims, characterized in that wood, straw, fibrous materials, etc., are admixed, as organic waste materials, with the crude extrudate, where the portion of organic waste materials is chosen to be as high as the process allows, and suitable additives which improve the elastic properties and the sorption isotherms are added to the extrusion raw material.

5. Process according to Claim 1, characterized in that biodegradable adhesives known per se are used as binder.

6. Process according to Claim 2, characterized in that the fibrous materials and the binder of the coating are mixed and then applied to the extrudate.

7. Process according to Claim 1, characterized in that substances containing calcium ions are admixed with binders or adhesives which are known to react correspondingly, for solidification and setting at the desired time in an adjustable manner.

8. Process according to one of the preceding claims, characterized in that a fibrous surface is intentionally produced, and colouring is carried out.

9. Use of the process according to one of the preceding claims for the production of packaging materials.

10. Packaging materials produced by the process according to one of Claims 1 to 9.

11. Use of the material produced according to one of Claims 1-8 on the basis of biopolymers as a replacement for polystyrene or polyurethane in porous bricks.

12. Expanded material for packaging and/or for incorporation into porous bricks, characterized in that it comprises starch-containing and/or protein-containing raw materials, organic waste materials and further additives for improving the elastic properties and for improving the sorption isotherms, with an additionally expanded, if desired by evaporation, coating of organic waste materials having a fibrous structure, such as chopped straw, wood products, keratin material and ground waste waper, and a suitable binder.

## Revendications

1. Procédé de fabrication de nouveaux matériaux d'emballage ou de nouveaux matériaux isolants de construction, en remplacement et à la manière des copeaux de polystyrène et des perles de polystyrène ou des produits en mousse de polyuréthane, caractérisé en ce qu'on extrude, comme produit extrudé brut, des matières premières contenant de l'amidon et/ou des protéines, comme le maïs, le riz, le blé, le soja, le tapioca, etc., éventuellement avec des matières premières contenant de la kératine, et des déchets organiques, ainsi que des additifs pour améliorer les propriétés élastiques et/ou l'isotherme d'adsorption, avec expansion, et on applique, sur le produit extrudé, un revêtement formé de déchets organiques ayant une structure fibreuse, comme des débris de paille, des produits à base de bois, un matériau à base de kératine, des déchets de papier broyés, etc., plus des liants biodégradables, le matériau de revêtement étant appliqué conjointement avec un solvant évaporable, et grâce à la formation de gaz qui en résulte, on obtient une augmentation supplémentaire du volume.

2. Procédé selon la revendication 1, caractérisé en ce qu'on applique le revêtement par pulvérisation.

3. Procédé selon la revendication 1, caractérisé en ce qu'on applique le liant par pulvérisation et on le revêt de matières fibreuses pour les coller sur celui-ci.

4. Procédé selon l'une des revendications précédentes, caractérisé en ce qu'on ajoute au produit extrudé brut, comme déchets organiques, du bois, de la paille, des matières fibreuses, etc., la quantité choisie de déchets organiques étant aussi élevée que possible du point de vue technologique, et on ajoute, au matériau brut d'extrusion, des additifs appropriés qui améliorent les propriétés élastiques et l'isotherme d'adsorption.

5. Procédé selon la revendication 1, caractérisé en ce qu'on utilise, comme liant, des colles connues qui sont biodégradables.

6. Procédé selon la revendication 2, caractérisé en ce qu'on mélange les matières fibreuses et le liant et ensuite, on applique ce mélange sur le produit extrudé.

7. Procédé selon la revendication 1, caractérisé en ce qu'on ajoute à de tels liants ou de telles colles, qui réagissent de façon correspondante et connue, des substances contenant des ions calcium pour leur durcissement et leur prise au moment souhaité, d'une manière qu'on peut ajuster.

8. Procédé selon l'une des revendications précédentes, caractérisé en ce qu'on prépare intentionnellement une surface fibreuse et on effectue une coloration.

9. Utilisation du procédé selon l'une des revendications précédentes pour la fabrication de matériaux d'emballage.

10. Matériaux d'emballage fabriqués selon le procédé d'une des revendications 1 à 9.

11. Utilisation du matériau fabriqué selon l'une des revendications 1 à 8, à base de biopolymères, comme matériau de substitution du polystyrène ou du polyuréthane dans des briques poreuses.

12. Matériau expansé pour emballages et/ou a incorporer dans des briques poreuses, caractérisé en ce qu'il est formé de matières premières contenant de l'amidon et/ou des protéines, de déchets organiques et d'autres additifs pour améliorer ses propriétés élastiques et pour améliorer l'isotherme d'adsorption, avec un revêtement expansé de façon supplémentaire, éventuellement par évaporation, formé de déchets organiques ayant une structure fibreuse, comme des débris de paille, des produits à base de bois, un matériau à base de kératine, des déchets de papier broyés, ainsi qu'un liant approprié.
